Europäisches Patentamt

European Patent Office

Office européen des brevets

(19)

(11) Veröffentlichungsnummer : **0 012 348**
**B1**

(12) **EUROPÄISCHE PATENTSCHRIFT**

(45) Veröffentlichungstag der Patentschrift :
24.02.82

(51) Int. Cl.³ : **C 09 D   3/72**

(21) Anmeldenummer : 79104934.9

(22) Anmeldetag : 05.12.79

(54) **Eine Polyisocyanat-Komponente und eine Polyhydroxy-Komponente aufweisende Bindemittel für aus wässriger Phase zu verarbeitende Beschichtungsmittel.**

(30) Priorität : 14.12.78 DE 2853937

(43) Veröffentlichungstag der Anmeldung :
25.06.80 (Patentblatt 80/13)

(45) Bekanntmachung des Hinweises auf die Patenterteilung : 24.02.82 Patentblatt 82/08

(84) Benannte Vertragsstaaten :
BE DE FR GB IT NL SE

(56) Entgegenhaltungen :
DE - A1 - 2 456 469
DE - B2 - 1 495 847

(73) Patentinhaber : BAYER AG
Zentralbereich Patente, Marken und Lizenzen
D-5090 Leverkusen 1, Bayerwerk (DE)

(72) Erfinder : Wegner, Christian, Dr.
Roggendorfstrasse 65 E
D-5000 Köln 80 (DE)
Erfinder : Findeisen, Kurt, Dr.
In der Follmühle 10
D-5068 Odenthal 2 (DE)
Erfinder : Weider, Franz, Dr.
Jacob-Fröhlich-Strasse 36
D-5090 Leverkusen 3 (DE)

Imprimerie Jouve, 18, rue St-Denis, 75001 Paris, France

Eine Polyisocyanat-Komponente und eine Polyhydroxy-Komponente aufweisende Bindemittel für aus wäßriger Phase zu verarbeitende Beschichtungsmittel

Die Herstellung von wasserdispergierbaren oder -löslichen blockierten Polyisocyanaten ist bereits bekannt (vgl. z.B. DE-OS 2 456 469 oder DE-OS 2 708 611). Die Verbindungen dieser Vorveröffentlichungen können in wäßriger Lösung bzw. Dispersion unter anderem in Kombination mit wasserdispergierbaren oder -löslichen Polyhydroxylverbindungen als Bindemittel für aus wäßriger Phase zu verarbeitende Polyurethanlacke verwendet werden. Hierzu ist es jedoch im Falle der Verwendung von nicht ohnehin wasserlöslichen Polyhydroxylverbindungen notwendig, beide Komponenten in getrennten Ansätzen zunächst hydrophil zu modifizieren, diese unter Zuhilfenahme von organischen Colösern in Wasser zu emulgieren und schließlich zu mischen. Eine lösungsmittelfreie Herstellung von wasserdispergierbaren oder -löslichen blockierten Polyisocyanaten ist im übrigen bei den Verfahren dieser Vorveröffentlichungen nur unter Mitverwendung hoher Mengen an ionischen Aufbaukomponenten oder unter Mitverwendung großer Anteile von Äthylenoxideinheiten aufweisenden Polyäthern als hydrophile Aufbaukomponente möglich, was bezüglich der Wasserresistenz bzw. der Lichtbeständigkeit der letztlich erhaltenen Flächengebilde von Nachteil ist.

Es war somit die Aufgabe der vorliegenden Erfindung, ein einfaches, d.h. insbesondere lösungsmittelfreies Verfahren zur Herstellung von wasserdispergierbaren oder -löslichen blockierten Polyisocyanaten zur Verfügung zu stellen, die auch in Kombination mit hydrophoben Polyhydroxylverbindungen als Bindemittel in wäßrigen Beschichtungsmitteln einsetzbar sind.

Diese Aufgabe konnte überraschenderweise durch die Verwendung von Diaminosulfonaten als hydrophile Aufbaukomponente für die blockierten Polyisocyanate gelöst werden.

Gegenstand der vorliegenden Erfindung sind eine Polyisocyanatkomponente und eine Polyhydroxykomponente aufweisende Bindemittel, die gegebenenfalls in in Wasser dispergierter oder teilweise dispergierter und teilweise gelöster Form vorliegen, für aus wäßriger Phase zu verarbeitende Beschichtungsmittel, dadurch gekennzeichnet, daß

1. die Polyisocyanatkomponente aus einem in Wasser löslichen oder dispergierbaren blockierten Polyisocyanat mit einem Gehalt an Sulfonatgruppen- $SO_3^-$ von 0,1 bis 10 Gew.-% welches durch Umsetzung eines in Wasser nicht löslichen und nicht dispergierbaren teilblockierten organischen Polyisocyanats, dessen Isocyanatgruppen zu 50 bis 99,8 % in mit einem Blockierungsmittel für Isocyanatgruppen blockierter Form vorliegen, mit organischen Polyaminosulfonaten oder organischen Polyaminosulfonsäuren hergestellt worden ist, wobei im letztgenannten Fall nach erfolgter Isocyanat-Additionsreaktion die Sulfonsäuregruppen in Sulfonatgruppen überführt werden, und

2. die Polyhydroxykomponente aus einem in Wasser nicht dispergierbaren und nicht löslichen Polyesterpolyol und/oder einem in Wasser nicht dispergierbaren und nicht löslichen Polyhydroxypolyacrylat besteht,

wobei die genannten Komponenten in solchen Mengenverhältnissen vorliegen, daß pro Äquivalent an blockierten Isocyanatgruppen 0,5 bis 2 Äquivalente an Hydroxylgruppen zur Verfügung stehen.

Zur Herstellung der erfindungswesentlichen Polyisocyanatkomponente eignen sich alle beliebigen organischen Polyisocyanate. Vorzugsweise werden di- bis tetrafunktionelle Polyisocyanate eines unter 800 liegenden Molekulargewichts mit aliphatisch und/oder cycloaliphatisch gebundenen Isocyanatgruppen eingesetzt. Besonders bevorzugt einzusetzende Polyisocyanate sind Tris-(isocyanatohexyl)-biuret gegebenenfalls im Gemisch mit seinen höheren Homologen, wie es beispielsweise gemäß der Lehre der deutschen Offenlegungsschrift 2 308 015 zugänglich ist. Ebenfalls sehr gut geeignet ist das 1-Isocyanato-3,3,5-trimethyl-5-isocyanatomethylcyclohexan, dessen Umsetzungsprodukte mit unterschüssigen Mengen an niedermolekularen Polyolen, dessen durch Isocyanuratbildung gewonnene Trimerisate, sowie dessen Uretdionstrukturen aufweisende Dimere.

Weiterhin bevorzugt geeignet sind auch die entsprechenden Umsetzungsprodukte von Hexamethylendiisocyanat mit unterschüssigen Mengen an niedermolekularen Polyolen, wie insbesondere Trimethylolpropan. Weiterhin bevorzugt geeignet sind das Bis-(6-isocyanatohexyl)-uretdion oder durch Trimerisierung von Hexamethylendiisocyanat, gegebenenfalls im Gemisch mit 2,4-Diisocyanatotoluol, erhältliche Isocyanuratgruppen aufweisende Polyisocyanate.

Neben diesen bevorzugt einzusetzenden Polyisocyanaten kommen auch beliebige andere aliphatische, cycloaliphatische, araliphatische, aromatische oder heterocyclische Polyisocyanate in Betracht, wie sie z.B. von W. Siefken in Liebigs Annalen der Chemie 562, Seite 75-136, beschrieben sind, wie beispielsweise Äthylendiisocyanat, 1,4-Tetramethylendiisocyanat, 1,6-Hexamethylendiisocyanat, 1,2-Dodecandiisocyanat, Cyclobutan-1,3-diisocyanat, Cyclohexan-1,3- und -1,4-diisocyanat sowie beliebige Gemische dieser Isomeren, 1-Isocyanato-2-isocyanatomethyl-cyclopentan, 1-Isocyanato-3,3,5-trimethyl-5-isocyanatomethylcyclohexan, 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'-und/oder -4,4'-diphenylmethan-diisocyanat, 1,3- und 1,4-Phenylen-diisocyanat, 2,4- und 2,6-Toluylendiisocyanat sowie beliebige Gemische dieser Isomeren, Diphenylmethan-2,4'- und/oder -4,4'-diisocyanat, Naphthalin-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten werden, und beliebige Mischungen der vorgenannten Polyisocyanate.

Die beispielhaft genannten Polyisocyanate werden erfindungsgemäß in teilweise mit Blockierungsmitteln blockierter Form eingesetzt. Geeignete Blockierungsmittel sind insbesondere Verbindungen mit vorzugsweise einer gegenüber Isocyanatgruppen reaktionsfähigen Gruppe, die mit organischen Isocyanaten bei über 50 °C, vorzugsweise zwischen 60 und 100 °C, eine Additionsreaktion eingehen und deren so erhaltene Additionsprodukte im Gemisch mit nichtflüchtigen primäre Hydroxylgruppen aufweisenden Polyolen bei Temperaturen zwischen 100 und 200 °C unter Freisetzung des Blockierungsmittels mit den nichtflüchtigen Polyolen unter Urethanbildung reagieren. Geeignete derartige Blockierungsmittel sind z.B. sekundäre oder tertiäre Alkohole, wie Isopropanol oder tert.-Butanol, C-H-acide Verbindungen, wie z.B. Malonsäuredialkylester, Acetylaceton, Acetessigsäurealkylester, Oxime, wie z.B. Formaldoxim, Acetaldoxim, Methyläthylketonoxim, Cyclohexanonoxim, Acetophenonoxim, Benzophenonoxim oder Diäthylglyoxim, Lactame, wie z.B. ε-Caprolactam, δ-Valerolactam, γ-Butyrolactam, Phenole, wie Phenol, o-Methylphenol, N-Alkylamide, wie z.B. N-Methyl-acetamid, Imide, wie Phthalimid, Imidazol, Triazol oder Alkali-bisulfite. Vorzugsweise werden erfindungsgemäß ε-Caprolactam und C-H-acide Verbindungen, insbesondere aktivierte Methylengruppen enthaltende Verbindungen, wie z.B. Malonsäuredialkylester mit $C_1$-$C_4$-Alkylgruppen, insbesondere Malonsäurediäthylester, Acetessigsäurealkylester mit einem $C_1$-$C_4$-Alkylrest, insbesondere Acetessigsäureäthylester oder Acetylaceton eingesetzt.

Zur Herstellung der erfindungsgemäß einzusetzenden teilblockierten Polyisocyanate werden die beispielhaft genannten unblockierten Polyisocyanate vorzugsweise mit einer solchen Menge an mindestens einem der beispielhaft genannten Blockierungsmitteln bei über 50 °C, vorzugsweise 60-100 °C zur Reaktion gebracht, welche einem Äquivalentverhältnis von NCO-Gruppen : NCO-reaktive Gruppen von 1: 0,5 bis 1: 0,99, vorzugsweise 1: 0,75 bis 1: 0,95 entspricht. Bei Einsatz von aktive Methylengruppen aufweisenden Blockierungsmitteln ist die Verwendung von basischen Katalysatoren, wie z.B. Diazabicyclooctan, Triäthylamin, Alkalialkoholaten oder Alkaliphenolaten wie beispielsweise Natriumäthylat oder Natriumphenolat vorteilhaft. Bei Verwendung von Blockierungsmitteln mit OH- oder NH-Gruppierung kann die Katalyse der Blockierungsreaktion mit einem Metallsalz, wie beispielsweise Dibutylzinndilaurat oder Zinnoctoat von Vorteil sein.

Die so erhaltenen teilblockierten Polyisocyanate können als solche als Ausgangsmaterial zur Herstellung der erfindungswesentlichen Polyisocyanatkomponente eingesetzt werden, sie können jedoch auch noch mit unterschüssigen Mengen an vorzugsweise difunktionellen Hydroxylverbindungen wie z.B. einfachen Glykolen wie Hexamethylenglykol, einfachen Polyesterdiolen eines unter 800 liegenden Molekulargewichts beispielsweise hergestellt durch Umsetzung von Adipinsäure oder Phthalsäure mit überschüssigen Mengen an Alkandiolen wie Äthylenglykol, Tetramethylenglykol oder Hexamethylenglykol oder einfachen Polyätherglykolen eines unter 800 liegenden Molekulargewichts wie z.B. den entsprechenden Polyäthylenglykolen oder Polypropylenglykolen modifiziert werden, so daß letztendlich als teilblockiertes Polyisocyanat teilblockierte NCO-Präpolymere zum Einsatz gelangen. Selbstverständlich ist es auch möglich, zunächst das unblockierte Polyisocyanat mit einer entsprechenden Menge an Hydroxylverbindung zu einem NCO-Präpolymeren umzusetzen, um anschließend die verbleibenden NCO-Gruppen, wie beschrieben teilweise zu blockieren. Diese zusätzliche Modifizierung der erst-genannten einfachen teilblockierten Polyisocyanate ist im allgemeinen jedoch nicht erforderlich. Die erfindungsgemäß einzusetzenden teilblockierten Polyisocyanate weisen im allgemeinen einen Gehalt an freien Isocyanatgruppen von 0,5 bis 10, vorzugsweise 1 bis 5 Gew.-% und einen Gehalt an blockierten Isocyanatgruppen (berechnet als NCO) von 1,2 bis 24,5, vorzugsweise 6 bis 14 Gew.-% auf, wobei das Molverhältnis NCO (frei) : NCO (blockiert) stets im Bereich zwischen 1: 1 und 1: 49 liegt.

Die zur hydrophilen Modifizierung der teilblockierten Polyisocyanate verwendeten Polyaminosulfonsäuren bzw. -sulfonate können aliphatischer, aromatischer oder araliphatischer Natur sein. Vorzugsweise werden Diaminosulfonate bzw. -sulfonsäuren mit einer oder zwei Sulfonatbzw. Sulfonsäuregruppen eingesetzt. Die Aminogruppen können primär oder sekundär sein. Die (Mit)verwendung von Triaminosulfonsäuren ist insbesondere im Falle der Verwendung von, in unblockierter Form difunktionellen, Polyisocyanaten möglich, jedoch nicht bevorzugt. Im allgemeinen weisen die Polyaminosulfonate bzw. -sulfonsäuren ein unter 500 liegendes Molekulargewicht auf. Typische Beispiele sind 2-(2-Aminoäthylamino)-äthansulfonsäure, 2,4-Diaminobenzolsulfonsäure, 2,5-Diaminobenzolsulfonsäure, 5-Amino-2-(phenylamino)-benzolsulfonsäure, 5-Amino-2-[(4-aminophenyl)-amino]-benzolsulfonsäure, 5-Amino-2-[(methylamino)-methyl]-benzolsulfonsäure, 2,4-Diamino-5-methylbenzolsulfonsäure, 5,6-Diamino-1-naphthalinsulfonsäure, 4,6-Diamino-1,3-benzoldisulfonsäure, 5,6-Diamino-1,3-naphthalindisulfonsäure, Benzidin-2,2'-disulfonsäure, 4,4-Diaminostilben-2,2'-disulfonsäure, bzw. deren Salze. Die Natur des Kations ist von völlig untergeordneter Bedeutung, im allgemeinen handelt es sich um die Natrium-, Kalium- oder Ammoniumsalze, wobei das Ammoniumkation sich sowohl von Ammoniak als auch von insbesondere tert. Aminen wie z.B. Triäthylamin ableiten kann. Vorzugsweise werden bei der erfindungsgemäßen Umsetzung bereits die Salze (Sulfonate) eingesetzt. Prinzipiell ist es jedoch auch möglich, die teilblockierten Polyisocyanate mit den freien Aminosulfonsäuren umzusetzen, und anschließend die Sulfonsäuregruppen durch eine einfache Neutralisationsreaktion in Sulfonatgruppen zu überführen.

Zur Herstellung der erfindungswesentlichen Polyisocyanatkomponente wird das teilblockierte Polyisocyanat vorzugsweise bei 20 bis 120 °C, insbesondere 40 bis 90 °C mit einer konzentrierten wäßrigen Lösung des Diaminosulfonats unter Einhaltung eines NCO/NH-Äquivalentverhältnisses von 1: 0,8 bis 1: 1,2 zur Reaktion gebracht. Dabei erfolgt unter Reaktion der freien Aminogruppen mit den noch nicht umgesetzten NCO-Gruppen die Bildung einer opaken Wasser in Öl-Emulsion. Schließlich wird unter Abkühlung auf Raumtemperatur mit Wasser weiter verdünnt. Dabei kann Zugabe des Wassers auch kontinuierlich, bzw. portionsweise und auch direkt nach Zugabe der ionischen Komponente erfolgen, was bevorzugt ist, wenn die Viskosität der Mischung zu stark ansteigt. Die hydrophile Komponente kann auch in der gesamten, zur Herstellung der Emulsion benötigten Wassermenge zugesetzt werden.

Wenngleich es bei der beschriebenen Ausführungsform von besonderem Vorteil ist, daß auf die Mitverwendung eines organischen Hilfslösers vollständig verzichtet werden kann, so kann selbstverständlich ein organisches Lösemittel beliebiger Art im Verlauf des Herstellungsprozesses zugeführt und gegebenenfalls wieder destillativ entfernt werden. Die Verwendung eines vorzugsweise mit Wasser mischbaren Lösemittels ist dann besonders bevorzugt, wenn ein Feststoffgehalt von > 50 % erwünscht ist.

So kann beispielsweise nach Zugabe der konzentrierten wäßrigen Lösung des diaminosulfonsäuren Salzes anstelle des Wassers nur mit vergleichsweise wenig Isopropanol verdünnt werden. Man erhält dann klare, bis zu 80 % Feststoff aufweisende Lösungen eines blockierten Isocyanats, welches sowohl mit organischem Lösemittel versetzt werden kann, als auch mit Wasser unter Bildung einer stabilen Emulsion beliebig weiter verdünnbar ist. Natürlich kann nach Zugabe der wäßrigen, konzentrierten Lösung des sulfonsäuren Salzes auch auf weitere Verdünnung mit Wasser oder organischen Lösemittel gänzlich verzichtet werden.

Falls das Salz der Diaminosulfonsäure direkt einsetzbar oder in einem organischen, mit Wasser mischbaren Lösungsmittel löslich ist, kann man vollkommen wasserfreie, jedoch wasserverdünnbare Lösungen mit hohen Feststoffanteilen erhalten.

Das Verfahren zur Herstellung der erfindungswesentlichen Polyisocyanatkomponente kann auch durch eine zusätzliche Mitverwendung von hydrophilen Polyätheralkoholen modifiziert werden. Dabei werden in die als Ausgangsmaterial eingesetzten teilblockierten Polyisocyanate vorzugsweise hydrophile Äthylenoxideinheiten aufweisende Polyätheralkohole eingebaut. Demzufolge sind im Rahmen der vorliegenden Erfindung unter « teilblockierten Polyisocyanaten » auch freie Isocyanatgruppen und blockierte Isocyanatgruppen in den obengenannten Mengen und zusätzlich hydrophile Polyäthersegmente enthaltende Verbindungen zu verstehen.

Geeignete hydrophile Polyätheralkohole sind insbesondere solche des Molekulargewichtsbereichs 500 bis 12 000, wie sie in an sich bekannter Weise durch Alkoxylierung von monofunktionellen Startermolekülen, wie z.B. einwertigen Alkoholen, wie Methanol, Äthanol, Propanol oder Butanol zugänglich sind und deren Polyalkylenoxidkette zu 50-100 % aus Äthylenoxideinheiten aufgebaut ist, und die neben Äthylenoxideinheiten vorzugsweise ausschließlich Propylenoxideinheiten aufweisen. Besonders bevorzugt sind die entsprechenden reinen Polyäthylenoxide mit einer endständigen Hydroxylgruppe.

Die zusätzliche Modifizierung der als Ausgangsmaterialien einzusetzenden teilblockierten Polyisocyanate mit diesen hydrophilen Polyätheralkoholen kann vor, während oder in Anschluß an die Blockierungsreaktion erfolgen. Im allgemeinen erfolgt die Umsetzung innerhalb der für die Blockierungsreaktion bereits genannten Temperaturbereiche. Die hydrophilen Polyätheralkohole werden, falls überhaupt, in solchen Mengen eingesetzt, daß in den Ausgangsmaterialien neben den bereits genannten freien und blockierten Isocyanatgruppen in den genannten Konzentrationen 0,1 bis 20, vorzugsweise bis max. 10 Gew.-% an innerhalb von Polyätherketten eingebauten Äthylenoxideinheiten $-CH_2-CH_2-O-$ vorliegen.

Die weitere erfindungswesentliche Modifizierung mit den Polyaminosulfonsäuren bzw. -sulfonaten erfolgt dann in der bereits geschilderten Weise, wobei jeweils erfindungsgemäße wasserdispergierbare bzw. -lösliche Verfahrensprodukte in wäßriger Phase erhalten werden, wobei die Dispersionen bzw. Lösungen beliebig mit Wasser weiterverdünnt werden können. Die erfindungswesentlichen Polyisocyanatkomponenten weisen im allgemeinen einen Gehalt von 1 bis 20, vorzugsweise 5 bis 12 Gew.-% an blockierten Isocyanatgruppen (berechnet als NCO), einen Gehalt von 0,1 bis 10, vorzugsweise 0,5 bis 5 Gew.-% an Sulfonatgruppen $-SO_3^{\ominus}$ und einen Gehalt von 0 bis 20, vorzugsweise 0 bis 10 Gew.-% an innerhalb einer Polyätherkette eingebauten Äthylenoxid-einheiten $-CH_2-CH_2-O-$ auf.

Die erfindungswesentlichen Polyisocyanatkomponenten weisen die bemerkenswerte Eigenschaft auf, nicht nur selbstdispergierbar bzw. -löslich zu sein, sondern auch Emulgatoren für an sich hydrophobe Polyesterpolyole bzw. Polyhydroxypolyacrylate darzustellen, wie sie gewöhnlich als Polyhydroxylkomponente in Polyurethanlacken zur Anwendung gelangen. Durch die hiermit ermöglichte Mitverwendung von hydrophoben Polyhydroxylverbindungen bei der Herstellung von aus wäßriger Phase zu verarbeitenden hitzevernetzbaren Lacken wird, im Vergleich zu den wäßrigen Systemen des Standes der Technik, bei welchen wasserdispergierbare bzw. -lösliche Polyhydroxylverbindungen mitverwendet werden müssen, eine ganz wesentliche Verbesserung der Wasserresistenz der letztlich erhaltenen Flächengebilde erreicht.

Die Polyhydroxylverbindungen stellen in allgemeinen Flüssigkeiten oder bei mäßig erhöhten Temperaturen (bis ca. 80 °C) schmelzende Festkörper dar. Sie weisen im allgemeinen einen Hydroxylgehalt von 0,5 bis 20, vorzugsweise 2 bis 15 Gew.-% auf.

Die Herstellung der entsprechenden Polyesterpolyole geschieht in an sich bekannter Weise durch Umsetzung von Polycarbonsäuren bzw. Polycarbonsäureanhydriden wie z.B. Adipinsäure, Phthalsäure, Tetrahydrophthalsäure und/oder Hexahydrophthalsäure bzw. deren Anhydriden mit überschüssigen Mengen an einfachen Alkoholen wie z.B. Äthylenglykol, 1,2-Propandiol, Trimethylenglykol, 1,2-Butandiol, 2,3-Butandiol, Tetramethylenglykol, Hexamethylenglykol, Trimethylolpropan und/oder Glycerin.

Die Herstellung der Polyhydroxypolyacrylate geschieht in an sich bekannter Weise durch Copolymerisation von olefinisch ungesättigten Monomeren wie z.B. Styrol, Acrylnitril, Acrylsäuremethylester, Acrylsäureäthylester, Methacrylsäuremethylester, Methacrylsäureäthylester, Acrylsäurebutylester und/oder Methacrylsäurebutylester mit aktive Wasserstoffatome aufweisenden olefinisch ungesättigten Monomeren wie z.B. Acrylsäure, Methacrylsäure und insbesondere Hydroxyalkylacrylaten bzw. -methacrylaten wie z.B. 2-Hydroxyäthylacrylat, 2-Hydroxyäthylmethacrylat, 3-Hydroxypropyl acrylat und/oder 3-Hydroxypropylmethacrylat.

Die beispielhaft genannten Polyesterole sind gegenüber den beispielhaft genannten Polyhydroxypolyacrylaten bevorzugt.

Die Herstellung der erfindungsgemäßen Bindemittel erfolgt im allgemeinen dergestalt, daß man die flüssige bzw. durch Erhitzen auf maximal 80 °C geschmolzene Polyhydroxylkomponente mit der wäßrigen Dispersion bzw. Lösung des blockierten Polyisocyanats verrührt, wobei die Mengenverhältnisse der beiden Komponenten so gewählt werden, daß für jedes Äquivalent an blockierten Isocyanatgruppen 0,5 bis 2 vorzugsweise 0,8 bis 1,2 Äquivalente an Hydroxylgruppen vorliegen.

Auf diese Weise werden die erfindungsgemäßen Bindemittel in Form wäßriger Dispersionen bzw. in Form von teils gelösten, teils dispergierten wäßrigen Systemen erhalten. Grundsätzlich ist es jedoch aus möglich, die verkappten Polyisocyanate in Abwesenheit von Wasser entweder in Gegenwart von organischen Lösungsmitteln oder in Substanz mit der Polyhydroxylkomponente in den angegebenen Mengenverhältnissen zu vermischen, um auf diese Weise zu wasserverdünnbaren Bindemitteln zu kommen.

Die in wäßriger Phase vorliegenden erfindungsgemäßen Bindemittel dienen insbesondere zur Herstellung von aus wäßriger Phase zu verarbeitenden Lacken, die im allgemeinen einen Bindemittelgehalt von 25 bis 70 Gew.-% aufweisen. In diesen wäßrigen Lacken können neben den erfindungsgemäßen Bindemitteln auch die üblichen Hilfs- und Zusatzmittel der Lacktechnologie enthalten sein. Hierzu gehören geispielsweise Aminoplast- und Phenoplast-Vorkondensate, die zur Absorption des abgespalteten Blockierungsmittels geeignet sein können, wobei aus den Vorkondensaten höhermolekulare, den Filmaufbau nicht störende oder weichmachende Komponenten entstehen. Hierfür geeignet sind beispielsweise Dimethylolharnstoff, Trimethylolmelamin, Hexamethylolmelamin, verätherte methylierte Melamine und Bis-alkoxymethylharnstoff. Weitere mögliche Zusätze sind die üblichen anorganischen Füllstoffe und Pigmente, Katalysatoren für die Vernetzungsreaktion oder sonstige Hilfsmittel.

Die die erfindungsgemäßen Bindemittel enthaltenden wäßrigen Lacke können nach allen beliebigen Methoden der Lacktechnologie auf beliebige Substrate aufgetragen werden. Zur Vernetzung ist ein Ausheizen der Beschichtung erforderlich, wobei zunächst das Wasser verdampft und anschließend die Vernetzungsreaktion eintritt. Im allgemeinen erfolgt die Aushärtung der Lackschichten im Temperaturbereich von 80 bis 180, vorzugsweise 100 bis 150 °C. Es werden so zähe, lösungsmittel- und wasserbeständige Filme erhalten.

Die nachfolgenden Beispiele dienen zur näheren Erläuterung der Erfindung, ohne diese zu beschränken. Alle Prozentangaben sind, soweit nicht anderslautend vermerkt, Gewichtsprozente und beziehen sich auf den Feststoffanteil der Verfahrensprodukte.

Beispiel 1

Eine Lösung von 2,5 g Natriumphenolat in 500 g biuretisiertem Hexamethylendiisocyanat (24 % NCO) wird 3 Stdn. bei 90 °C mit 390 g Malonsäurediäthylester umgesetzt. Bei 60 °C gibt man nun 268 g einer 11,7 %igen wäßrigen Lösung des Natriumsalzes der 2-(2-Aminoäthylamino)-äthansulfonsäure zu. Nach 2 Stdn. wird mit 700 ml Wasser zu einer milchigen Emulsion verdünnt..

Feststoffgehalt : 50 %
NCO (blockiert) : 11 %
$SO_3^\ominus$ : 1,4 %

Beispiel 2

500 g eines biuretisierten Hexamethylendiisocyanats (23,8 % NCO) werden bei 100 °C portionsweise mit 251 g ε-Caprolactam versetzt. Man rührt 3 Stunden nach, kühlt auf 60 °C ab und setzt bei hoher Rührgeschwindigkeit eine 60 °C warme Lösung von 57 g Natrium-2,4-diamino-benzolsulfonat in Wasser zu. Man rührt 2 Stunden bei 60 °C, wobei man zwischendurch mit 100 ml Wasser verdünnt. Sodann setzt man unter Wegnahme der Heizung weitere 800 ml wasser zu und rührt bis zum Erhalt einer dünnflüssigen, milchig-opaken Emulsion nach.

Feststoffgehalt : 43,5 %
NCO (verkappt) : 11,6 %
$SO_3^-$ : 2,7 %

Beispiel 3

370 g Malonsäurediäthylester werden bei Raumtemperatur mit 2,7 g Natriumphenolat 15 Minuten verrührt. Man setzt 500 g eines biuretisierten Hexamethylendiisocyanats (23,8 % NCO) zu und rührt nach Abklingen der exothermen Reaktion 3 Stunden bei 90 °C nach. Sodann werden 40 g eines auf n-Butanol gestarteten Äthylenoxid-Polyäthers (MG = 2 000) und 1 ml Zinn-(II)-octoat zugegeben und es wird weitere 3 Stunden bei 90 °C gerührt. Unter Erhöhung der Rührerdrehzahl setzt man nur eine Lösung von 46 g Natrium-2,4-diaminobenzolsulfonat in 150 ml wasser zu und rührt 2 Stunden bei 60 °C.

Es wird mit 800 ml wasser verdünnt und bis zum Erhalt einer milchig-opaken Emulsion nachgerührt.

Feststoffgehalt : 50 %
NCO (blockiert) : 10,2 %
$SO_3^-$ : 1,8 %
—$CH_2$—$CH_2$—O— : 4,2 %

Beispiel 4

In einer Lösung von 3,5 g Natriumphenolat in 258 g Malonsäurediäthylester gibt man 336 g He-xamethylendiisocyanat. Nach 3 stündiger Reak-tion bei 90 °C setzt man 40 g eines auf n-Butanol gestarteten Äthylenoxid-Polyäthers (MG = 2 000) und 0,5 ml Zinn-(II)-octoat zu und rührt 3 Stunden bei 80 °C. Sodann tropft man 90 g Butandiol-1,3 zu und läßt 2 Stunden bei 80 °C reagieren. Die Mischung wird dann auf 60 °C abgekühlt und mit 90 g einer 46 %igen Lösung des Natriumsalzes der 2-(2-Amino-äthylamino)-äthansulfonsäure 2 Stunden bei 60 °C umgesetzt. Anschließend wird mit 650 ml Wasser zu einer milchig-opaken Emulsion verdünnt.

Feststoffgehalt : 52 %
NCO (blockiert) : 8,8 %
$SO_3^-$ : 2,3 %
—$CH_2$—$CH_2$—O— : 5,5 %

Beispiel 5

67,5 g Butandiol-1,3 werden bei 120 °C zu 333 g Isophorondiisocyanat zugetropft. Man läßt 2 Stdn. rühren, kühlt auf 90 °C ab und setzt dann 187 g Malonsäurediäthylester zu, in welchem zuvor 3 g Natriumphenolat gelöst wurden. Es wird 3 Stdn. bei 90 °C gerührt. Sodann gibt man unter Abkühlung auf 70 °C eine Lösung von 42 g des Natriumsalzes der 2-(2-Aminoäthylamino)-äthansulfonsäure in 350 ml Isopropanol zu. Man rührt 2 Stdn. nach und erhält schließlich eine wasserverdünnbare, gelblich-trübe Lösung eines blockierten Polyisocyanats.

Feststoffgehalt : 70 %
NCO (blockiert) : 7,7 %
$SO_3^\ominus$ : 4,0 %

Beispiel 6

Eine Lösung von 2,5 g Natriumphenolat in 390 g Malonsäurediäthylester setzt man 3 Stunden bei 90 °C mit 500 g biuretisiertem Hexamethylendiisocyanat (NCO = 23,8 %) um. Bei 60 °C wird eine Lösung von 31,3 g des Natrium-salzes der 2-(2-Aminoäthylamino)-äthansulfon-säure in 200 g Isopropanol zugegeben. Nach 2 stündiger Reaktion erhält man eine hellgelbe, wasserverdünnbare Lösung eines blockierten Polyisocyanats.

Feststoffgehalt : 82 %
NCO (blockiert) : 11,1 %
$SO_3^-$ : 1,4 %

Beispiel 7

131 g Malonsäurediäthylester, 1,2 g Natriumphenolat, 250 g eines biuretisierten Hexamethylendiisocyanats werden wie in Beispiel 1 angegeben, umgesetzt. Dann setzt man 30 g eines auf n-Butanol gestarteten Äthylenoxid Polyäthers (MG = 2 000) zu und rührt 5 Stunden bei 90 °C. Es werden nun 190 g eines aus Hexandiol-1,6 und Phthalsäureanhydrid nach an sich bekannten Verfahren hergestellten Polyesters (OH-Zahl 56, Säurezahl max. 2, Visk./75 °C 2 600-3 400 cP) zugegeben. Nach 2-stündigem Rühren bei 85 °C, läßt man bei 60 °C 2 Stunden mit 34,5 g Natrium-2,4-diaminobenzolsulfonat, gelöst in 250 ml Wasser, reagieren, wobei aufgrund starker Viskositätszunahme nach 20 Minuten mit 100 ml Wasser verdünnt wird. Sodann setzt man 550 ml Wasser hinzu und rührt 1 Stunde bei 60 °C weiter. In die so erhaltene Emulsion dosiert man nun 115 g eines aus Phthalsäureanhydrid, Äthylengly-kol und Trimethylolpropan hergestellten Poly-esters (OH-Zahl 395, Säurezahl 11-15, Bisk./75 °C 1 200 cP). Man rührt unter Wegnahme der Heizung bis zum Erhalt einer milchig-opaken Emulsion nach.

Feststoffgehalt : 46 %
NCO (blockiert, bez. auf Polyisocyanatkompo-nente) : 5,4 %
$SO_3^\ominus$ (bez. auf Polyisocyanatkomponente) : 2 %
—$CH_2$—$CH_2$—O— (bez. auf Polyisocyanat-komponente) : 4,7 %
Molverhältnis NCO (blockiert) : OH = 1,01 : 1

Beispiel 8

Eine Lösung von 2,5 g Natriumphenolat in 370 g Malonsäurediäthylester wird 3 Stunden bei 90 °C mit 500 g eines biuretisierten Hexamethylendiisocyanats (NCO = 23,8 %) umgesetzt. Dann

werden 80 g eines auf n-Butanol gestarteten Äthylenoxid-Polyäthers (MG = 2 000) und 1 ml Zinn—(II)—octoats zugesetzt. Nach 3 Stunden wird auf 60 °C abgekühlt und man läßt 2 Stunden mit 90 g einer 46 %igen wäßrigen Lösung des Natriumsalzes des 2-(2-Aminoäthylamino)-äthansulfonsäure reagieren. Man verdünnt mit 200 ml Wasser und setzt dann 480 g eines aufgeschmolzenen, nach an sich bekannten Verfahren auf Phthalsäureanhydrid, Maleinsäureanhydrid, Hexahydrophthalsäureanhydrid und Trimethylolpropan hergestellten Polyesters (OH-Zahl 250-270, Säurezahl max. 3, Schmp. 90-100 °C) zu, wobei zwischendurch mit insgesamt 2 200 ml Wasser verdünnt wird, so daß man schließlich eine milchige Emulsion erhält.

Feststoffgehalt : 38 %

NCO (blockiert, bez. auf Polyisocyanatkomponente) : 9,7 %

$SO_3^{\ominus}$ (bez. auf Polyisocyanatkomponente) : 1,7 %

—$CH_2$—$CH_2$—O— (bez. auf Polyisocyanatkomponente) : 8,0 %

Molverhältnis NCO (blockiert) : OH = 0,96 : 1

Beispiel 9

Man setzt 1,25 g Natriumphenolat, 185 g Malonsäurediäthylester, 250 g eines biuretisierten Hexamethylendiisocyanats (NCO = 23,8 %), 40 g Polyäther und 0,5 g Zinn-(II)-octoat entsprechend Beispiel 8 um. Bei 60 °C läßt man dann 2 Stunden mit 20,7 g des Natriumsalzes der 2-(2-Aminoäthylamino)-äthansulfonsäure, gelöst in 250 g Isopropanol reagieren. Es werden dann 245 g des in Beispiel 8 beschriebenen Polyesters zugesetzt. Man rührt nach bis zum Erhalt einer homogenen Lösung und verdünnt schließlich mit weiteren 150 g Isopropanol, wobei man eine hellgelbe, schwach trübe, wasserverdünnbare Lösung erhält.

Feststoffgehalt : 65 %

NCO (blockiert, bez. auf Polyisocyanatkomponente) : 9,7 %

$SO_3^{\ominus}$ (bez. auf Polyisocyanatkomponente) : 1,7 %

—$CH_2$—$CH_2$—O— (bez. auf Polyisocyanatkomponente) : 8,1 %

Molverhältnis NCO (blockiert) : OH = 1 : 1

Beispiel 10 (Verwendungsbeispiel)

Die gemäß Beispiel 8 hergestellte Einkomponentenemulsion wird auf ein entfettetes Aluminiumblech in dünner Schicht aufgetragen und 30 Minuten bei 130 °C eingebrannt. Man erhält einen klaren, elastischen, lösungsmittel- und wasserbeständigen Film.

## Anspruch

Eine Polyisocyanatkomponente und eine Polyhydroxykomponente aufweisende Bindemittel, die gegebenenfalls in in Wasser dispergierter oder teilweise dispergierter und teilweise gelöster Form vorliegen, für aus wäßriger Phase zu verarbeitende Beschichtungsmittel, dadurch gekennzeichnet, daß

1. die Polyisocyanatkomponente aus einem in Wasser löslichen oder dispergierbaren blockierten Polyisocyanat mit einem Gehalt an Sulfonatgruppen —$SO_3^-$ von 0,1 bis 10 Gew.-% welches durch Umsetzung eines in Wasser nicht löslichen und nicht dispergierbaren teilblockierten organischen Polyisocyanats, dessen Isocyanatgruppen zu 50 bis 99,8 % in mit einem Blockierungsmittel für Isocyanatgruppen blockierter Form vorliegen, mit organischen Polyaminosulfonaten oder organischen Polyaminosulfonsäuren hergestellt worden ist, wobei im letztgenannten Fall nach erfolgter Isocyanat-Additionsreaktion die Sulfonsäuregruppen in Sulfonatgruppen überführt werden, und

2. die Polyhydroxykomponente aus einem in Wasser nicht dispergierbaren und nicht löslichen Polyesterpolyol und/oder einem in Wasser nicht dispergierbaren und nicht löslichen Polyhydroxypolyacrylat besteht, wobei die genannten Komponenten in solchen Mengenverhältnissen vorliegen, daß pro Äquivalent an blockierten Isocyanatgruppen 0,5 bis 2 Äquivalente an Hydroxylgruppen zur Verfügung stehen.

## Claim

Binders containing a polyisocyanate component and a polyhydroxy component and present either in dispersion or partly in dispersion and partly in solution in water for coating compositions to be processed from the aqueous phase, characterised in that

1. the polyisocyanate component consists of a watersoluble or dispersible blocked polyisocyanate containing from 0.1 to 10 % by weight of sulfonate groups $SO_3^-$ which has been produced by reacting a partially blocked organic polyisocyanate neither soluble nor dispersible in water, 50 to 99.8 % of whose isocyanate groups are blocked by a blocking agent for isocyanate groups, with organic polyaminosulfonates or organic polyaminosulfonic acids ; in the latter case, the sulfonic acid groups are converted into sulfonate groups after the isocyanate addition reaction, and

2. the polyhydroxy component consists of a polyester polyol neither dispersible nor soluble in water and/or of a polyhydroxy-polyacrylate neither dispersible nor soluble in water, the above-mentioned components being present in such quantitative ratios that from 0.5 to 2 equivalents of hydroxyl groups are available per equivalent of blocked isocyanate groups.

## Revendication

Agents liants comportant un composant polyisocyanate et un composant polyhydroxy, ces agents liants se présentant éventuellement sous une forme dispersée dans l'eau ou partiellement dispersée et partiellement dissoute dans l'eau, tandis qu'ils sont destinés à des agents d'enduction devant être traités à partir d'une phase aqueuse, caractérisés en ce que :

1. le composant polyisocyanate est constitué d'un polyisocyanate bloqué dispersable ou soluble dans l'eau qui contient 0,1 à 10 % en poids de groupes sulfonate $SO_3^-$ et que l'on prépare en faisant réagir un polyisocyanate organique partiellement bloqué, non soluble et non dispersable dans l'eau et dont les groupes isocyanate se présentent, à raison de 50 à 99,8 %, sous une forme bloquée avec un agent de blocage pour des groupes isocyanate, avec des polyaminosulfonates organiques ou des acides polyaminosulfoniques organiques, les groupes d'acide sulfonique étant, dans ce dernier cas, transformés en groupes sulfonate après la réaction d'addition d'isocyanate, et

2. le composant polyhydroxy est constitué d'un polyester-polyol non dispersable et non soluble dans l'eau et/ou d'un polyhydroxy-polyacrylate non soluble et non dispersable dans l'eau, les composants précités étant présents dans des rapports quantitatifs calculés de telle sorte que, par équivalent de groupes isocyanate bloqués, on ait 0,5 à 2 équivalents de groupes hydroxy.